# EUROPÄISCHE PATENTSCHRIFT

(11) **EP 0 675 151 B1**
(45) Veröffentlichungstag und Bekanntmachung des Hinweises auf die Patenterteilung: **04.09.2002**
(21) Anmeldenummer: 95103946.0
(22) Anmeldetag: 17.03.1995
(51) Int. Cl.: C08G 77/46, C08L 83/12

(54) **Copolymere auf Verzweigter Polysiloxan-Polyether-Basis, ein Verfahren zu ihrer Herstellung und ihre Verwendung**
Branched polysiloxane-polyether copolymers, preparation and use
Copolymères ramifiées, à base de polysiloxane-polyéther, méthode pour leur préparation et leur usage

(30) Priorität: 30.03.1994 DE 4411079
(43) Veröffentlichungstag der Anmeldung: 04.10.1995
(73) Patentinhaber: GE Bayer Silicones GmbH & Co. KG, 40699 Erkrath (DE)
(72) Erfinder: Schlitte, Sabine, Dr., D-40764 Langenfeld (DE); Eversheim, Hubertus, D-42929 Wermelskirchen (DE); Wagner, Gebhard, Dr., D-51519 Odenthal (DE); Käsler, Karl-Heinz, D-51467 Bergisch Gladbach (DE); Mazanek, Jan, Dr., D-51061 Köln (DE); Meier-Westhues, Hans-Ulrich, Dr., D-51379 (DE)

(56) Entgegenhaltungen:
- EP-A- 0 449 050
- EP-A- 0 462 389
- EP-A- 0 545 002
- DE-A- 4 239 054

## Beschreibung

Die vorliegende Erfindung betrifft Copolymere auf Polysiloxan-Polyether-Basis, die T-Einheiten enthalten und aus statistisch verknüpften Organo-Polysiloxaneinheiten und linearen Polyethereinheiten bestehen, ein Verfahren zur Herstellung und deren Verwendung.

Es ist eine Vielzahl von Copolymeren aus Polysiloxanen und Polyethem bekannt. Diese Copolymere zeichnen sich vor allem durch ein breites Anwendungsspektrum aus. Welche Verwendung sich für welches Copolymer eignet, hängt dabei maßgeblich von der Struktur des Polysiloxan- und des Polyethersegments, deren Verhältnis zueinander, der Verknüpfungsart zwischen der Polysiloxan- und der Polyetherkette, d.h. der Verknüpfung über ein Sauerstoff- oder ein Kohlenstoffatom des Polyethers, und von der gegenseitigen Anordnung ab. Desweiteren ist der Einsatz dieser Copolymere von den gegebenenfalls noch im Copolymer vorhandenen Reaktivstellen, wie z.B. SiH-funktionellen Gruppen oder C=C-Doppelbindungen abhängig.

Die Herstellung von Polysiloxan-Polyether-Copolymeren kann bekannterweise durch Umsetzung von Polyethern mit SiH-gruppenhaltigen Polysiloxanen unter Pt-Katalyse erfolgen. Unter Einsatz von OH-endgestoppten Polyethern wird eine Si-O- und unter Einsatz von alkenylhaltigen Polyethern eine Si-C-Bindung ausgebildet (DE-A- 1 165 028 und W. Noll, "Chemie und Technologie der Silicone", Verlag Chemie, Kapitel 7.4.4, S. 321 ff.). Eine weitere Synthesemöglichkeit ist die Umsetzung eines beispielsweise mit Halogen-, Alkoxy- oder Acetoxy-Gruppen substituierten Siloxans mit OH-funktionellen Polyethern (vgl. DE-A- 3 637 155, EP-A- 25 822).

Aus der EP-A-449 050 sind härtbare Organo-Polysiloxane mit über SiC-Gruppen gebundenen Oxalkylenethergruppen bekannt.

Bislang sind jedoch keine Polysiloxan-Polyether-Copolymere gezielt hergestellt worden, die sowohl über SiO- und SiC-Bindungen verfügen, deren Polysiloxaneinheiten über Polyethereinheiten verbunden sind und die zudem verzweigt sein können.

Copolymere aus Polysiloxanen und Polyethern zählen zu den wirksamsten Lackadditiven überhaupt. Dabei werden meist Blockcopolymere eingesetzt, die aus Methyl- und/oder Phenylsiloxanen und Polyethern aus Ethylen- und/oder Propylenoxid aufgebaut sind. Eine Übersicht über Lackadditive auf Siliconbasis wird z.B. in W. Spratte u.a., Paint India, Dezember 1992, Seiten 17 bis 23, oder in Walter Noll, "Chemie und Technologie der Silicone", Verlag Chemie, Kapitel 7.4.4, Copolymere mit Polyethern, S. 321 ff., gegeben.

Obwohl Lackadditive auf Siliconbasis eine so breite Anwendung bei der Herstellung von Lacken und anderen Beschichtungen gefunden haben, reicht ihre Wirksamkeit oft nicht aus, um die gewünschten Eigenschaften der Lacke und anderer Beschichtungen einzustellen, z.B. in bezug auf Verlauf, Oberflächeneigenschaften und Glanz. Es besteht also ein Bedarf an neuen, verbesserten Lackadditiven.

Aufgabe der vorliegenden Erfindung war die Bereitstellung von neuartigen Copolymeren auf Polysiloxan-Polyether-Basis, die über sowohl verbesserte Eigenschaften als Lackadditiv verfügen als auch je nach Reaktionsfähigkeit, nach Viskosität bzw. auch nach Gehalt an SiH-funktionellen Gruppen in den unterschiedlichsten Bereichen anwendbar sind.

Gegenstand der vorliegenden Erfindung sind Copolymere auf Polysiloxan-Polyether-Basis, die T-Einheiten enthalten und aus statistisch verknüpften Organo-Polysiloxaneinheiten und linearen Polyethereinheiten bestehen, in denen
- die Organo-Polysiloxan- und Polyethereinheiten über Si-O-C- oder Si-C-Bindungen und die Organo-Polysiloxanketten über Polyethereinheiten miteinander verknüpft sind,
- worin die Organo-Polysiloxaneinheiten untereinander unter Ausbildung mindestens einer T-Einheit verknüpft sind, wobei das Verhältnis der T-Einheiten zu den Gesamtsiloxyeinheiten 0,02 bis 0,25 beträgt und
- das Verhältnis der Anzahl der Polyetherheinheiten zu Organo-Polysiloxaneinheiten 0,07 bis 0,33, bevorzugt 0,10 bis 0,30, besonders bevorzugt 0,14 bis 0,25 und die Zahl der Siloxaneinheiten je Gesamtmolekül maximal 50 beträgt.

Der molare Anteil von T-Einheiten an den Gesamtsiloxyeinheiten beträgt vorzugsweise 0,02 bis 0,25. Das Gewichtsverhältnis von Polyether zu Gesamtmolekül beträgt dabei vorzugsweise 0,45 bis 0,85, besonders bevorzugt 0,6 bis 0,7. Die Zahl der Siloxaneinheiten je Gesamtmolekül beträgt vorzugsweise maximal 50.

Unter T-Einheit wird im Sinne der vorliegenden Erfindung eine trifunktionelle Siloxangruppe 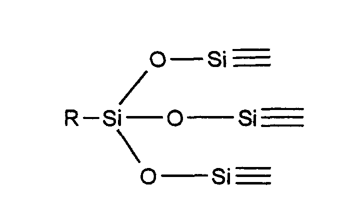 und unter T* eine trifunktionelle Siloxangruppe 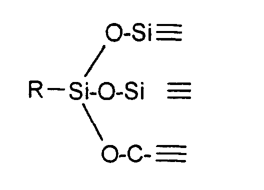 verstanden.

Daher erfolgt bei den erfindungsgemäßen Organo-Polysiloxan-Polyether-Copolymeren die Verküpfung von
- linearen Organo-Polysiloxaneinheiten untereinander unter Ausbildung von T-Einheiten sowie über Polyethereinheiten unter Ausbildung von T*-Einheiten und
- Organo-Polysiloxan- und Polyethereinheiten über Si-O-C- und/oder Si-C-Bindungen, vorzugsweise an "seitenständigen", d.h. in der Kette eingeordneten und nicht endständigen Siloxaneinheiten.

In den erfindungsgemäßen Copolymeren ist das Copolymer auf Polysiloxan-Polyether-Basis vorzugsweise ein Copolymer der Formel (I): 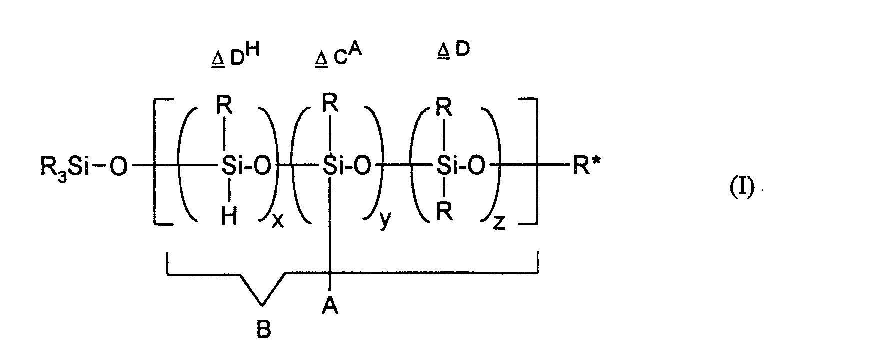
- mit R =: Alkylresten mit 1 bis 18 Kohlenstoffatomen, bevorzugt 1-4 Kohlenstoffatomen, besonders bevorzugt Methyl, gesättigten oder ungesättigten C₅-C₆-Ringsystemen, Aromaten, besonders bevorzugt Phenyl, wobei R innerhalb der Siloxankette [B] gegebenenfalls nicht einheitlich ist,
- mit R* =: SiR₃, -(CH₂)ₙ[O(CH₂)ₙ]ₘ-O(CH₂)ₙ-R¹ und/oder
-(CH₂)ₙ[O(CH₂)ₙ]ₘ-O(CH₂)ₙ₋₂-CH=CH₂ für x = 0
- mit R¹ =: -H, -OH, 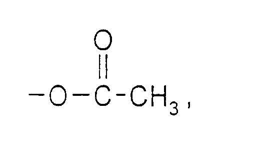
- mit A =: (CH₂)ₙ[O(CH₂)ₙ]ₘO(CH₂)ₙ-R¹
- und/oder =: -O(CH₂)ₙ[O(CH₂)ₙ]ₘ-OR²
- mit: R² = -(CH₂)ₙ-R¹
- und/oder =: R² = -(CH₂)ₙ₋₂-CH=CH₂
bei x = 0
- und/oder =: 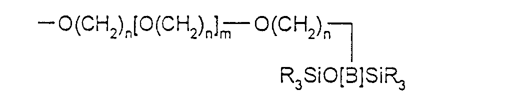
- und/oder =: 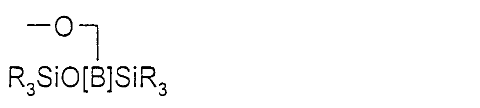
- mit n =: 2, 3 und/oder 4,
- mit: x = 0 bis 9
y = 0 bis 17
z = 0 bis 50 mit x+y+z ≠ 0
- und m =: 4 - 200, wobei die Indices für [B] 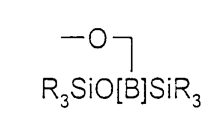 und 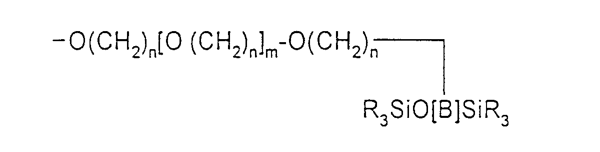
innerhalb einer Kette können gleich oder ungleich sein.

In den erfindungsgemäßen Polyethern sind die linearen Polyethereinheiten vorzugsweise Mischpolyether aus Ethylenoxid und Propylenoxid. Das Verhältnis von Propylenoxideinheiten zur Gesamtzahl der Ethylenoxid- und Propylenoxideinheiten beträgt bevorzugt 0 - 0,5.

Die freien OH-Funktionen des Polysiloxan-Polyethers können mit den gängigen aliphatischen und/oder aromatischen Isocyanaten reagieren.

Die Verbindungen liegen in Form eines Gemisches mit einer im wesentlichen durch statistische Gesetze geregelten Verteilung vor. Die Werte für m, x, y und z stellen deshalb einen Mittelwert dar.

In einer Ausführungsform der vorliegenden Erfindung weisen die Organopolysiloxane vorzugsweise freie SiH-Gruppen auf. Das Gewichtsverhältnis von Polyether zu Gesamtmolekül beträgt vorzugsweise 0,45 bis 0,85, besonders bevorzugt 0,6 bis 0,7. Die Gesamtzahl der Siloxaneinheiten pro Molekül ist dabei vorzugsweise maximal 50.

Die Organo-Polysiloxane können gegebenenfalls bereits T-Einheiten enthalten. Der molare Anteil von T-Einheiten an den Gesamtsiloxyeinheiten beträgt vorzugsweise 0,02 bis 0,25.

In den erfindungsgemäßen Copolymeren sind die eingesetzten linearen Polyethereinheiten, vorzugsweise entweder OH- und alkyl- bzw. alkenylendgestoppt und/oder beidseitig OH-endgestoppt.

Die Herstellung der erfindungsgemäßen Copolymere gelingt nur über die Verknüpfung von Organo-Polysiloxaneinheiten über Polyether-Einheiten (T*) und/oder den nachträglichen Einbau von T-Einheiten in lineare Organo-Polysiloxan-Polyether Blockpolymere, wobei im letztgenannten Fall eine bestehende Si-O-Polyether-Bindung zugunsten einer Si-O-Si-Bindung gespalten wird.

Gegenstand der vorliegenden Erfindung ist auch ein Verfahren zur Herstellung der Copolymere auf Polysiloxan-Polyether-Basis, wonach SiH-funktionelle Organo-Polysiloxane mit linearen OH-endgestoppten alkenylhaltigen Polyethem in Gegenwart starker Basen umgesetzt werden und die Reaktion gegebenenfalls durch Neutralisation abgebrochen wird.

In dem erfindungsgemäßen Verfahren werden vorzugsweise Basen eingesetzt, die einen pK_{b}-Wert < 0 und eine Löslichkeit in der Reaktionsmischung von mindestens 1000 ppm aufweisen. Als Base besonders bevorzugt ist NaOCH₃.

Zur Herstellung der erfindungsgemäßen Polymere sind folgende Reaktionen von Bedeutung
1) Addition eines Polyethers an die Siloxaneinheit unter Ausbildung einer Si-C-Polyether-Bindung (D*) 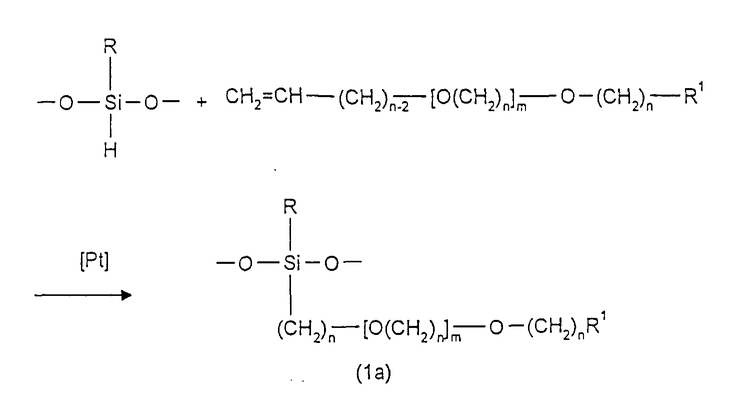 mit
   - R=: C₁-C₁₈-Alkylresten, bevorzugt C₁-C₄-Alkylresten, besonders bevorzugt Methyl, gesättigte oder ungesättigte C₅-C₆-Ringsysteme, Aromaten, besonders bevorzugt Phenyl
   und
   - R¹ =: -H, -OH, 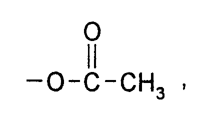
2) Ausbildung einer Si-O-Polyether-Bindung (T*) 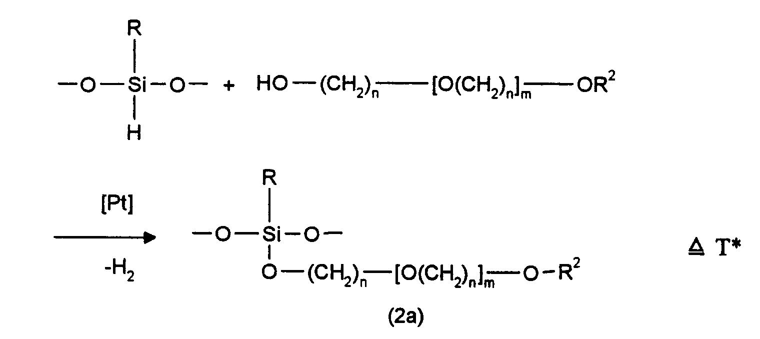 mit
   - R² =: -(CH₂)ₙ-OH, -(CH₂)ₙ₋₂ -CH=CH₂.
3) Verknüpfung zweier Polysiloxaneinheiten über eine Polyethereinheit (D*T* bzw. T*T*) 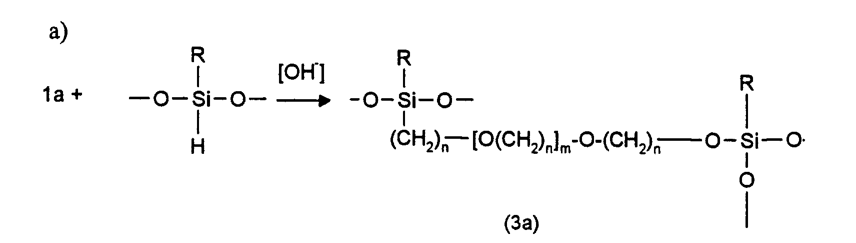 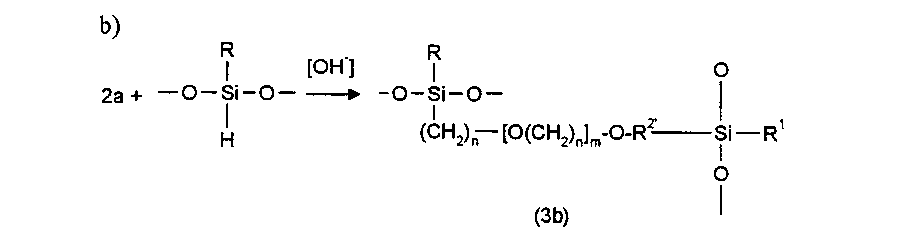
   - mit R^{2'} =: -(CH₂)ₙO-, -(CH₂)ₙ₋₂-CH₂-CH₂- 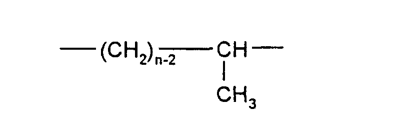
4) Ausbildung einer Si-O-Si-Bindung (T) unter Spaltung einer Si-O-Polyether-Bindung 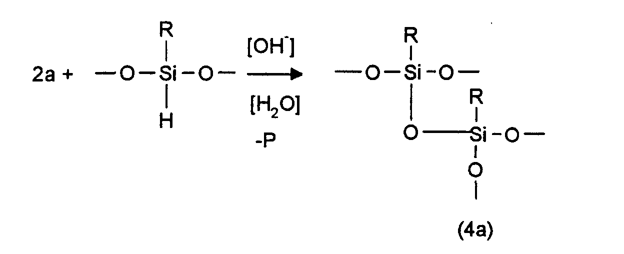 mit [OH⁻] = starke Base, z.B. NaOMe₃
   und

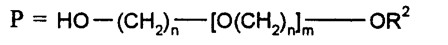

Im Rahmen des erfindungsgemäßen Verfahrens wird die Reaktion entweder bis zur vollständigen Entfernung aller SiH-Gruppen in dem Polysiloxan-Polyether-Copolymer durchgeführt oder die Reaktion nach Erreichen der gewünschten Viskosität durch Neutralisation, vorzugsweise durch die Zugabe von Essigsäure, gestoppt.

Gegebenenfalls können in die Polymere anschließend funktionelle Gruppen durch Acetylierung oder Umsetzung mit Isocyanaten eingeführt werden.

Gegenstand der vorliegenden Erfindung ist auch die Verwendung der erfindungsgemäßen Polymere vorzugsweise
- als Additive für lösemittelhaltige und auch lösemittelarme Lacke, Farben, Pasten, Mörtel, Beschichtungen und andere Zubereitungen,
- zur Beschichtung von Textilien in der Textilindustrie,
- als Ausgangsstoffe für Vernetzungsreaktionen, z.B. für Harze und Elastomere,
- als Schaumstabilisator,
- als Entschäumer,
- und/oder als Emulsionsstabilisator.

Die Auswahl der Edukte und das Verhältnis von Polysiloxan zu Polyether sowie die Anzahl der reaktiven Gruppen im Polysiloxan entscheiden über die bevorzugte Verwendung.

Die Verwendung der erfindungsgemäßen Copolymere auf Polyether-Polylsiloxan-Basis in lösemittelhaltigen, lösemittelhaltigen und wäßrigen Lacken ist bevorzugt.

Auf diese Weise ist es möglich, auf einen Anwendungsbereich hin maßgeschneidertes Polyether-Polysiloxan herzustellen.

Werden Organo-Polysiloxan-Polyether-Copolymere eingesetzt, die mehr SiH-Gruppen enthalten, als die für die Einführung der T-Einheiten notwendige Anzahl, so sind diese niederviskosen Copolymere aufgrund ihrer Haftungseigenschaften auf Textilien, z.B. in der Textilindustrie oder aber als Komponente bei Polyadditionsreaktionen zur Darstellung höherviskoser Copolymere geeignet.

SiH-freie Polysiloxan-Polyether-Copolymere mit einer Anzahl von bis zu 50 Polysiloxaneinheiten eignen sich besonders als Additive für lösemittelhaltige bzw. auch -arme Lacke, Farben, Pasten, Mörtel und Beschichtungen, insbesondere zur Verbesserung der Oberflächen- und Verlaufseigenschaften und des Glanzes.

Für diesen Anwendungszweck können die erfindungsgemäßen Organo-Polysiloxan-Polyethergemische sowohl in Substanz als auch in verdünnter Form eingesetzt werden. Bevorzugte Verwendung finden jedoch verdünnte Formulierungen, die neben den erfindungsgemäßen Verbindungen Wasser oder Lösemittel oder deren Gemische enthalten. Als Lösemittel seien genannt Butyldiglykol, Isopropanol, Methoxypropylacetat, Ethylen- und/oder Propylenglykol, Butylacetat, Xylol, höhersiedende aromatische, aliphatische und/oder aromatisch/aliphatische Erdöl-Destillationsfraktionen usw.. Die gebrauchsfertigen Zubereitungen der erfindungsgemäßen Verbindungen stellen dann 0,1 bis 90, bevorzugt 1 bis 50 %ige Lösungen dar.

Die erfindungsgemäßen Organo-Polysiloxan-Polyether-Copolymere sind in beliebigen Mengen zusetzbar, werden aber bevorzugt in einer Menge von 0,01 bis 5, besonders bevorzugt in 0,05 bis 2 Gew.-%, bezogen auf das Gewicht des gebrauchsfertigen Beschichtungsmittels, verwendet.

SiH-haltige Polysiloxan-Polyether-Copolymere sind auch als Agens in Vernetzungsreaktionen, z.B. für Harze und Elastomere geeignet.

Weitere Anwendungsbereiche für die erfindungsgemäßen Copolymere liegen z.B. in einem
- Einsatz als Schaumstabilisator, beispielsweise für PU-Schaumstoffe,
- Einsatz als Entschäumer, insbesondere bei wäßrigen Systemen,
- Einsatz als Emulsionsstabilisator, z.B. für kosmetische Zubereitungen.

Der Gegenstand der vorliegenden Erfindung soll an folgenden Beispielen erläutert werden. Die Glanzmessungen wurden dabei nach DIN 67 530 und die Haze-Wert-Bestimmung nach DIN 67 530 durchgeführt.

### Ausführungsbeispiele

### Herstellvorschrift 1:

### Herstellung von Polyethern - Herstellung von allylgestarteten Polyethern (Beispiele 1-7, B1 und B2)

432,7 g 2-Propenol (Allylalkohol) werden vorgelegt. Nach gründlichem Spülen mit Stickstoff und Zugabe von 10 g wäßriger KOH (50 %) werden ohne Entwässerung bei 110-120°C und 2 bar Stickstoff, 2 596 g Propylenoxid und anschließend bei 105-110°C 1 968,9 g Ethylenoxid zudosiert. Das Reaktionsgemisch läßt man ca. 4 Stunden nachreagieren. Anschließend wird das Reaktionsgemisch mit Schwefelsäure neutralisiert und mit 2,5 g (0,05 %) Ionol (2,6-Di-tert.-butyl-4-methylphenol) stabilisiert. Nach Entwässern wird das Produkt filtriert und für 5 Stunden bei 110°C und < 6 mbar ausgeheizt.

**Tabelle 1**

| Übersicht über die Einsatzmengen der Edukte in den weiteren Beispielen: | | | | | |
|---|---|---|---|---|---|
| Beispiel | Allylalkohol [g] | KOH [g] 50 %ig in H₂O | Propylenoxid [g] | Ethylenoxid [g] | Ionol [g] |
| 1-7, B1, B2 | 432,7 | 10,0 | 2596,0 | 1968,9 | 2,5 |
| 8 | 309,1 | 10,0 | - | 4688,4 | 2,5 |
| 9 | 582,2 | 10,0 | - | 4415,3 | 2,5 |
| 10-14 | 336,3 | 10,0 | 1345,3 | 3315,4 | 2,5 |

### - Allgemeine Herstellvorschrift für butylgestartete Polyether (Beispiel 15)

1 253,5 g Diethylenglykolmonobutylether werden vorgelegt. Nach Zugabe von 10 g wäßriger KOH (50 %) wird entwässert und mit Stickstoff inertisiert. Unter 2 bar Stickstoff werden bei 105-110°C 3 744,4 g Ethylenoxid zudosiert. Das Reaktionsgemisch läßt man ca. 4 Stunden nachreagieren. Anschließend wird das Reaktionsgemisch mit Schwefelsäure wird neutralisiert und mit 2,5 g (0,05 %) Ionol stabilisiert. Nach Entwässern wird das Produkt filtriert und für 5 Stunden bei 110°C und < 6 mbar ausgeheizt.

**Tabelle 1a**

| Übersicht über die nach Herstellvorschrift 1 dargestellten Polyether | |
|---|---|
| Beispiel Nr. | Polyether |
| 1-7, B1-B2 | CH₂=CH-CH₂O(C₃H₆O)₄(C₂H₄O)₆H |
| 8 | CH₂=CH-CH₂O(C₂H₄O)₂₀H |
| 9 | CH₂=CH-CH₂O(C₂H₄O)₁₀H |
| 10-14 | CH₂=CH-CH₂O(C₃H₆O)₄(C₂H₄O)₁₃H |
| 15 | C₄H₉O-(C₂H₄O)₁₃H |

Die in Tab. 2 auf S. 18 angegebenen Einsatzmengen werden gemäß den folgenden Herstellungsvorschriften umgesetzt.

### Herstellvorschrift 2 (Vorstufe für Verbindungen 1 bis 13 sowie Vergleichsbeispiele B1 und B2)

### Herstellung eines linearen SiH-Öls

Nach den Einwaagen gemäß Tabelle 2 werden Octamethylcyclotetrasiloxan (D₄), Hexamethyldisiloxan (M₂) und Baysilone Öl MH 15 (trimethylsilyl-endgestopptes Methylhydrogenpolysiloxan mit durchschnittlich 30 Methylhydrogensiloxyeinheiten) in bekannter Weise unter saurer Katalyse äquilibriert.

Der Katalysator wird neutralisiert und als Salz durch Filtration abgetrennt.

Die nicht SiH-funktionellen Produkte werden nach der Filtration abdestilliert.

### Herstellvorschrift 3 (2. Stufe bzw. Vorstufe 2 für Verbindungen 1 bis 13 sowie Vergleichsbeispiel B2)

### Herstellung des Polyethersiloxanes (Einwaagen siehe Tabelle 2)

Je nach Verbindung werden ca. 0,2 mol eines allylalkohol-gestarteten OH-funktionellen Polyethers gemäß Tabelle 1a zusammen mit einem Pt-Katalysator vorgelegt (50 ppm Pt bzgl. Gesamtansatz) und mit 0,3 mol SiH des nach Herstellvorschrift 2 hergestellten SiH-Öls bei 80 bis 130°C umgesetzt. Im Anschluß an die Addition wird restliches SiH mit den OH-Gruppen des Polyethers durch Zugabe von 1000 ppm NaOCH₃ bei Raumtemperatur umgesetzt.

Nachdem das Produkt SiH-frei ist, wird mit Essigsäure neutralisiert.

Die Zusammensetzung von Verbindungen entsprechend der Beispiele 2 und 5 wird durch Auswertung des ²⁹Si- und des ¹H-NMR-Spektrums bestimmt (s. Tabelle 3).

### Herstellvorschrift 4

### (für Verbindungen 1 bis 13 sowie Vergleichsbeispiel B2)

### Acetylierung des Polyether-Polysiloxans

Das nach Herstellvorschrift 3 erhaltene Produkt wird mit Essigsäureanhydrid unter Zugabe von 0,5 % Phosphorsäure verestert. Essigsäure sowie die noch enthaltenen nichtfunktionellen Siloxane werden durch Ausheizung im Vakuum entfernt. Das Produkt wird neutralisiert und filtriert. Die Zusammensetzung des Produktes wird durch Auswertung des ²⁹Si- und des ¹H-NMR-Spektrums bestimmt, siehe Tabelle 3.

### Herstellvorschrift 5

### (formuliert für Beispiel 9)

0,30 mol eines allylalkohol-gestarteten OH-funktionellen Polyethers (aus Tabelle 1b) werden zusammen mit einem Pt-Katalysator (50 ppm Pt bezüglich Gesamtansatz) und mit 0,3 mol SiH des nach Herstellvorschrift 2, Beispiel 3, hergestellten SiH-Öls bei 80 bis 130°C umgesetzt. Im Anschluß an diese Umsetzung werden 1000 ppm Natriummethylat zugesetzt und 0,3 mol SiH eines nach Herstellvorschrift 2, Beispiel 3, erhaltenen SiH-Öls zugegeben. Nach einer Reaktion von 3 h bei 130°C wird mit HOAc neutralisiert, ausgeheizt und filtriert.

Die Zusammensetzung des Produktes wird durch Auswertung des ²⁹Si- und ¹H-NMR-Spektrums bestimmt (siehe Tabelle 3).

### Herstellvorschrift 6

### (formuliert für Beispiel 14)

157,0 g (0,97 mol) Hexamethyldisiloxan, 59,6 g (0,40 Mol) Methyltrichlorsilan, 148,3 g (0,50 mol) Octamethylcyclotetrasiloxan werden in 300 g Xylol gelöst und unter sauer äquilibrierenden Bedingungen mit 16,2 g (0,90 mol) H₂O hydrolysiert. Im Anschluß an die Hydrolyse werden 65,4 g (0,03 mol) Baysilone Öl MH 15 (s. Herstellvorschrift 2) einäquilibriert. Der Katalysator wird neutralisiert und als Salz durch Filtration abgetrennt. Die Lösung dieses verzweigten Siliconöls wird entsprechend Herstellvorschrift 3 mit 1 mol des mit Essigsäureanhydrid/0,5 % Phosphorsäure acetylierten Polyethers unter Pt-Katalyse (50 ppm Pt, bezogen auf Gesamtansatz) umgesetzt.

Die Zusammensetzung des Produktes wird durch Auswertung des ²⁹Si- und ¹H-NMR-Spektrums bestimmt (siehe Tabelle 3).

### Herstellvorschrift 7

### (formuliert für Beispiel 15)

162,4 g (1 mol) Hexamethyldisiloxan, 59,6 g (0,40 mol) Methyltrichlorsilan, 222,4 g (0,75 mol) Octamethylcyclotetrasiloxan werden unter sauer äquilibrierenden Bedingungen mit 1,8 g (0,1 mol) H₂O und 74,4 g (1,24 mol) Essigsäure hydrolysiert. Im Anschluß an die Hydrolyse wird das Reaktionsgemisch mit 500 g Xylol und 995 g (1,10 mol) eines Butanol-gestarteten Polyethers (OH-Zahl 62, Ethylenoxid-Basis) versetzt. Durch Einleiten von NH₃ bis zur Sättigung bei 40°C wird die gewünschte Umsetzung zu dem Si-O-C-verknüpften Polyether durchgerührt. Im Anschluß an die Reaktion wird filtriert, ausgeheizt und das Produkt noch heiß mit Butyldiglykol verdünnt.

Die Zusammensetzung des Produktes wird durch Auswertung des ²⁹Si- und ¹H-NMR-Spektrums bestimmt (siehe Tabelle 3).

### Herstellvorschrift 8: (Vergleichsvorschrift (VV))

### (Vergleichsbeispiel B1)

0,34 Mol eines allylgestarteten Polyethers aus Tabelle 1a mit der OH-Zahl 112 werden unter Katalyse mit 0,5 % H₃PO₄ mit einem 10 %igen Überschuß Essigsäureanhydrid acetyliert. Essigsäure und überschüssiges Essigsäureanhydrid werden durch Destillation entfernt, die Phosphorsäure wird neutralisiert, Salz und Überschuß des Neutralisationsmittels durch Filtration abgetrennt.

Der erhaltene OH-freie Polyether wird in gewohnter Weise mit 0,30 mol SiH des nach Herstellvorschrift 2, Beispiel 3, hergestellten SiH-Öls unter Addition an die Doppelbindung umgesetzt. Die nichtfunktionellen Siloxane werden durch Destillation abgetrennt und das Produkt filtriert.

Die Zusammensetzung des Produktes wird durch Auswertung des ²⁹Si- und des ¹H-NMR-Spektrums bestimmt. (siehe Tabelle 3).

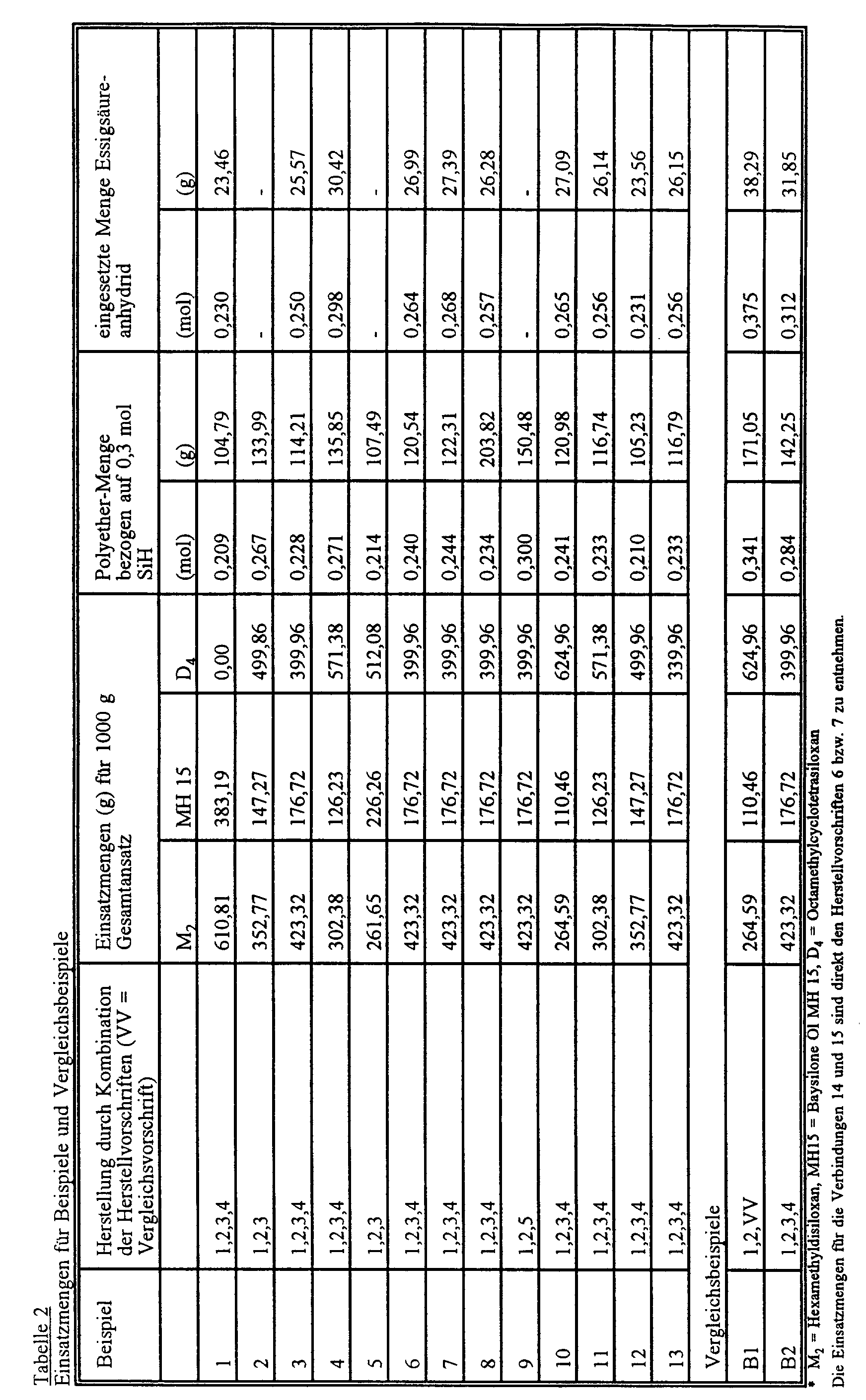

In der Übersicht über die Zusammensetzung der Produkte in Tabelle 3 werden folgende Abkürzungen verwendet: 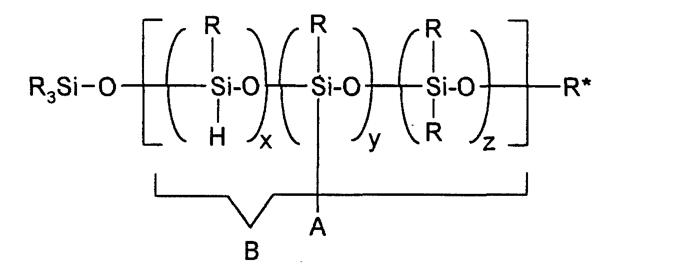 mit
R = CH₃,
x = 0,
R* = -SiR₃ mit Ausnahme von Bsp. 15, wo
R* zu 54% SiR₃ und zu 46% -O-(C₂H₄O)₁₃ C₄H₉.

Die übrigen Angaben für y, z und A finden sich in Tabelle 3.

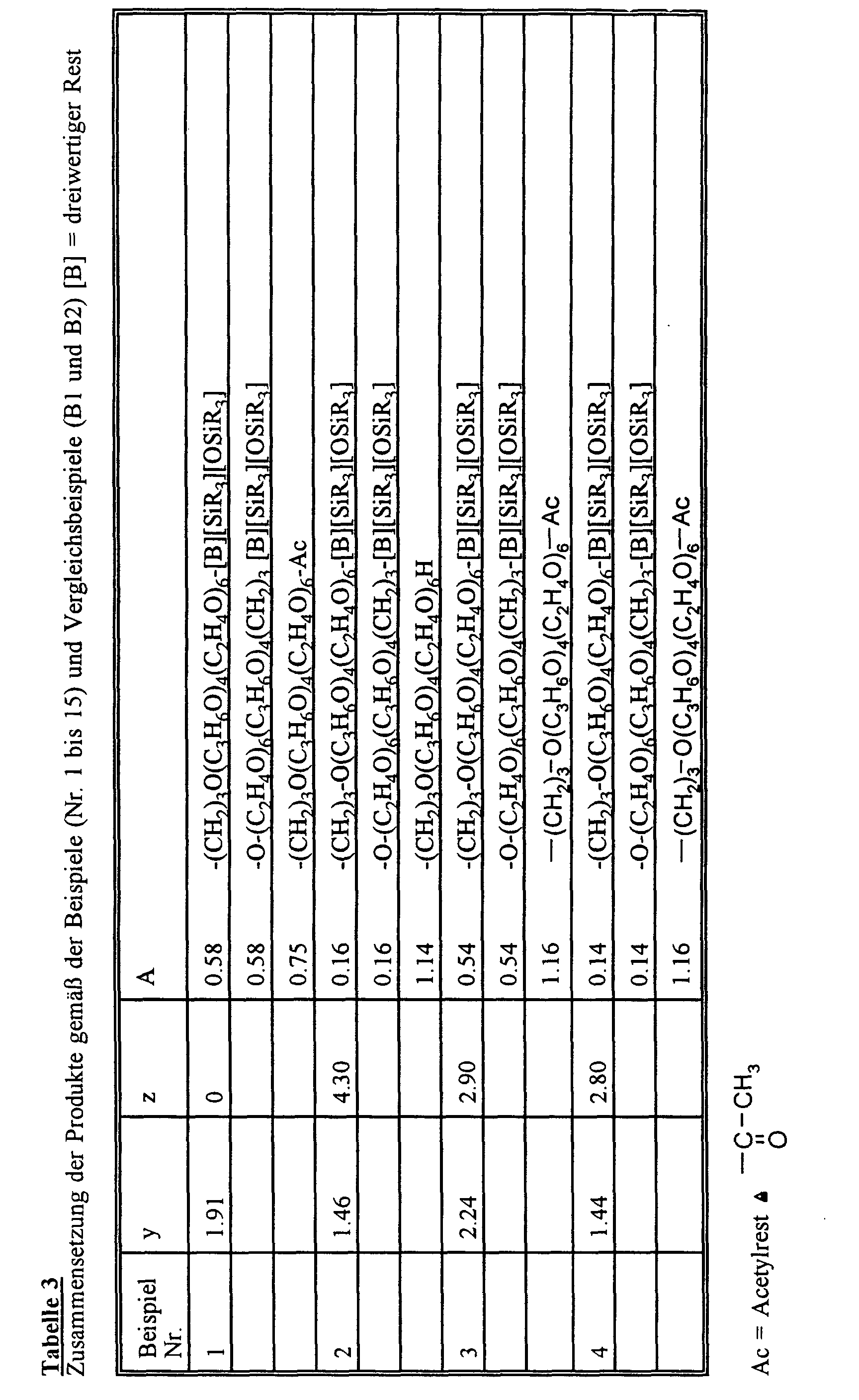

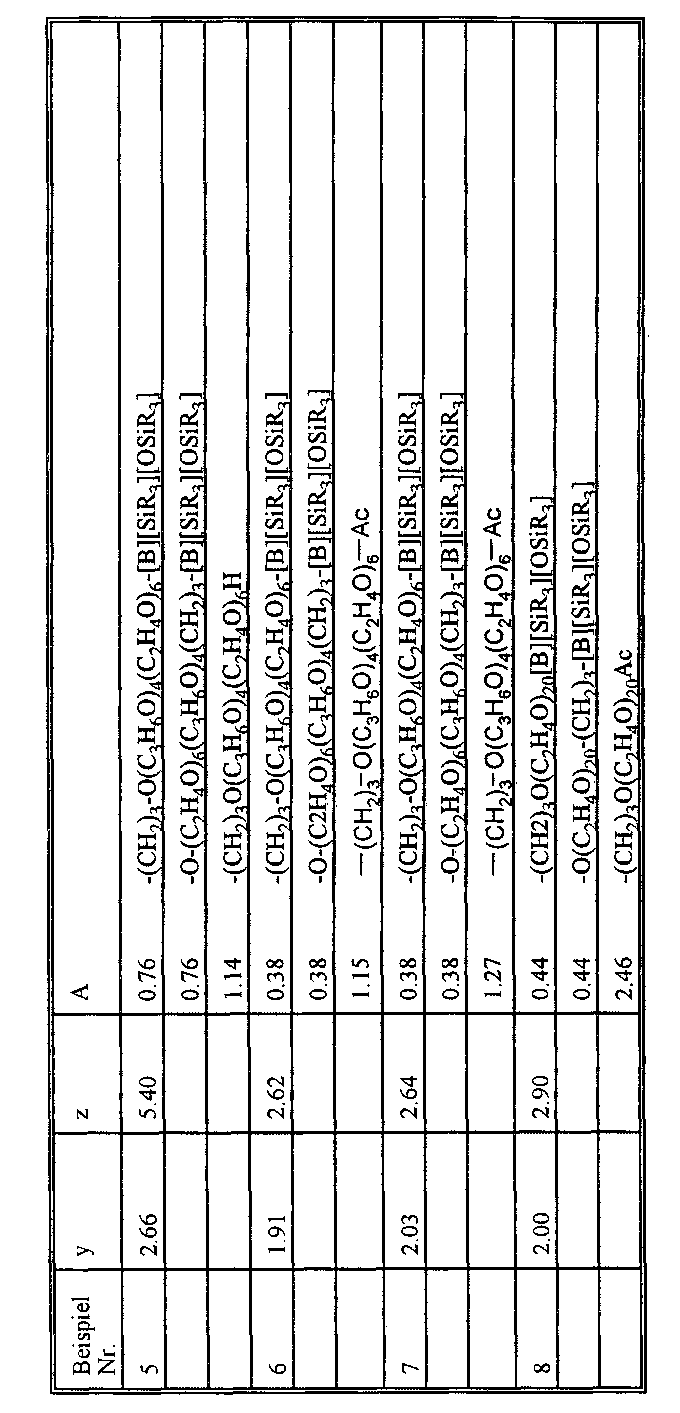

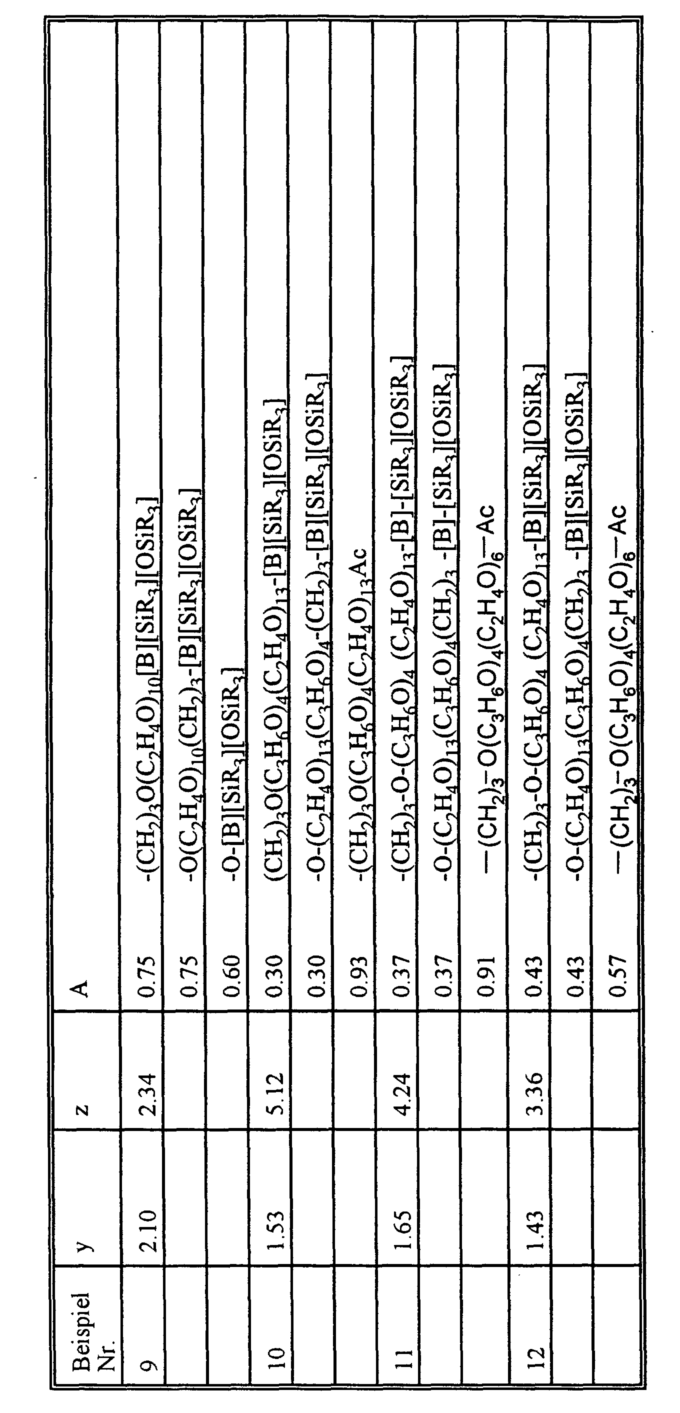

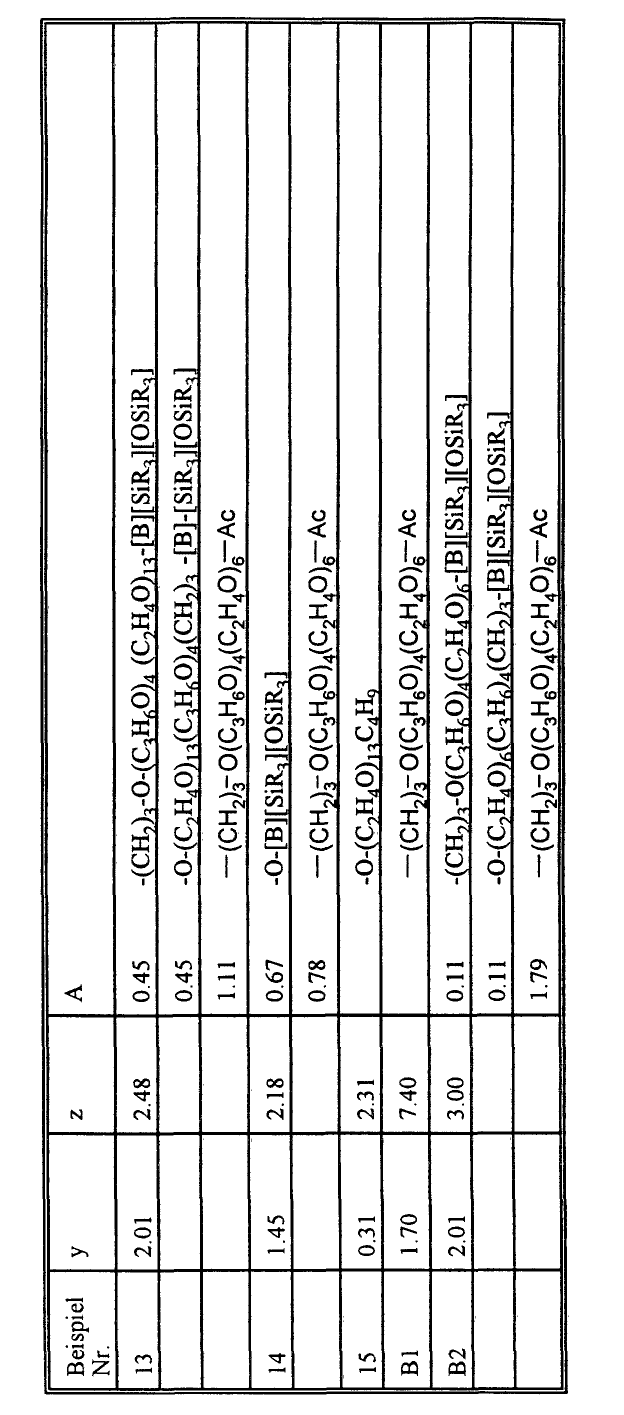

Zur Beurteilung der Wirksamkeit der erfindungsgemäßen Organo-Polysiloxan-Polyether wurden diese dargestellten Copolymere hinsichtlich ihrer Eignung als Additive für Lacke nach folgenden Prüfvorschriften getestet.

### Prüfvorschrift für Klarlacke

Geeignete Glasplatten werden mit handelsüblichem Basislack beschichtet. Auf diese Platten werden mit den erfindungsgemäßen Verbindungen versetzte Decklacke unten genannter Zusammensetzung aufgespritzt.

Die obere Hälfte der Platten wird mit Druckluft angeblasen, um die Zugluftempfindlichkeit zu überprüfen.

| Rezeptur 1 | |
|---|---|
| Macrynal® SM 510, | |
| OH-funktionelles Polyacrylat der Fa. Hoechst (60 %ig in Xylol), | 108,4 Gew.-Teile |
| Butylacetat | 75,1 Gew.-Teile |
| Methoxypropylacetat | 38,0 Gew.-Teile |
| Zinkoctoat (Metallgehalt 1,2 %) | 1,6 Gew.-Teile |
| Desmodur®N75: Polyisocyanat der Fa. Bayer AG | 46,8 Gew.-Teile |

| Rezeptur 2 | |
|---|---|
| Desmophen® 670, schwach verzweigter, hydroxylgruppenhaltiger Polyester der Fa. Bayer AG (80 %ig in Butylacetat), | 82,7 Gew.-Teile |
| Xylol | 4,1 Gew.-Teile |
| Butylacetat | 14,9 Gew.-Teile |
| Methoxypropylacetat | 30,2 Gew.-Teile |
| Zinkoctoat (Metallgehalt 1,2 %) | 1,1 Gew.-Teile |
| Butylacetat/Xylol (94:6) | 60,8 Gew.-Teile |
| Desmodur® N75, Polyisocyanat der Fa. Bayer AG | 45,1 Gew.-Teile |

| Rezeptur 3 | |
|---|---|
| Bayhydrol®LS 2065, wäßrige hydroxyfunktionelle Polyurethan-Dispersion der Fa. Bayer AG | 61,7 Gew.-Teile |
| Cymel®352, Melaminharz der Fa. Cyanamid | 14,9 Gew.-Teile |
| Ethyldiglykol | 1,1 Gew.-Teile |
| Tinuvin®1130, Lichtschutzmittel der Fa. Ciba Geigy, 50 %ig in Ethylglykol | 1,6 Gew.-Teile |
| Tinuvin®292, Lichtschutzmittel der Fa. Ciba Geigy, 50 %ig in Ethylglykol | 0,8 Gew.-Teile |
| Wasser | 19,6 Gew.-Teile |

| Rezeptur 4 | |
|---|---|
| Bayhydrol®LS 2017, Polyester-Polyurethan-Dispersion der Fa. Bayer AG | 64,9 Gew.-Teile |
| Tinuvin®1130, Lichtschutzmittel der Fa. Ciba Geigy, 20 % in Methoxypropylacetat | 4,3 Gew.-Teile |
| Tinuvin®292, Lichtschutzmittel der Fa. Ciba Geigy, 20 % in Methoxypropylacetat | 2,1 Gew.-Teile |
| Wasser | 2,1 Gew.-Teile |
| Desmodur LS®2032, Polyisocyanat der Fa. Bayer AG | 15,6 Gew.-Teile |

### Prüfvorschrift für pigmentierte Decklacke

Auf gereinigte Stahl- bzw. Glasplatten werden mit den erfindungsgemäßen Verbindungen versetzte Decklacke nachfolgender Zusammensetzung aufgetragen:

| Rezeptur 5 | | |
|---|---|---|
| 1. | Reibansatz | |
| | Bayhydrol®LS 2017, Polyester-Polyurethan- | |
| | Dispersion der Fa. Bayer AG | 14,29 Gew.-Teile |
| | Dimethylethanolamin (DMEA) 10 % H₂O | 1,20 Gew.-Teile |
| | Wasser | 4,51 Gew.-Teile |
| | Bayertitan®R-KB-4, Pigment der Fa. Bayer AG | 30,00 Gew.-Teile |
| | - Vordispergieren mit den Dissolver | |
| | - pH-Wert 8,5 bis 9,0 kontrollieren (gegebenenfalls mit DMEA einstellen) | |
| | - Perlmühlenanreibung unter 5 µm | |
| | | |

| 2. | Nachsatz zum Auflacken | |
|---|---|---|
| | Bayhydrol® LS 2017, Polyester-Polyurethan- | |
| | Dispersion der Fa. Bayer AG | 35,71 Gew.-Teile |
| | Cymel®327, Melaminharz der Fa. Cyanamid | 10,00 Gew.-Teile |
| | Wasser | 4,04 Gew.-Teile |

### Rezeptur 6

- Desmophen®A 365, hydroxylgruppenhaltiges Polyacrylat der Fa. Bayer AG (65 %ig in Butylacetat:Xylol 3:1) 32,32 Gew.-Teile
- Celluloseacetobutyrat (CAB 551-0,01) der Fa. Eastman-Kodak (10 %ig in Butylacetat) 0,63 Gew.-Teile
- Tinuvin®292, Lichtschutzmittel der Fa. Ciba Geigy (50 %ig in Xylol) 0,63 Gew.-Teile
- Diazabicyclooctan (Dabco®LV-33), Katalysator der Fa. Biesterfeld (10 %ig in Butylacetat) 1,57 Gew.-Teile
- Bentone®38, (Schwebemittel) Montmorillonit der Fa. Kronos-Titan GmbH (10 %iger Aufschluß in Solvesso® 100) 2,20 Gew.-Teile
- Aerosil®R972, pyrogene Kieselsäure der Fa. Degussa 0,16 Gew.-Teile
- Bayertitan® R-KB-4, Pigment der Fa. Bayer AG 25,11 Gew.-Teile
- Lösergemisch (Xylol:Butylacetat:Solvesso®100 2:2:1) 11,88 Gew.-Teile
- Desmodur®N3390, Polyisocyanat der Fa. Bayer AG (90%ig in Butylacetat:Solvesso®100 1:1) 11,53 Gew.-Teile
- Lösergemisch (Xylol:Butylacetat 1:1) 13,47 Gew.-Teile

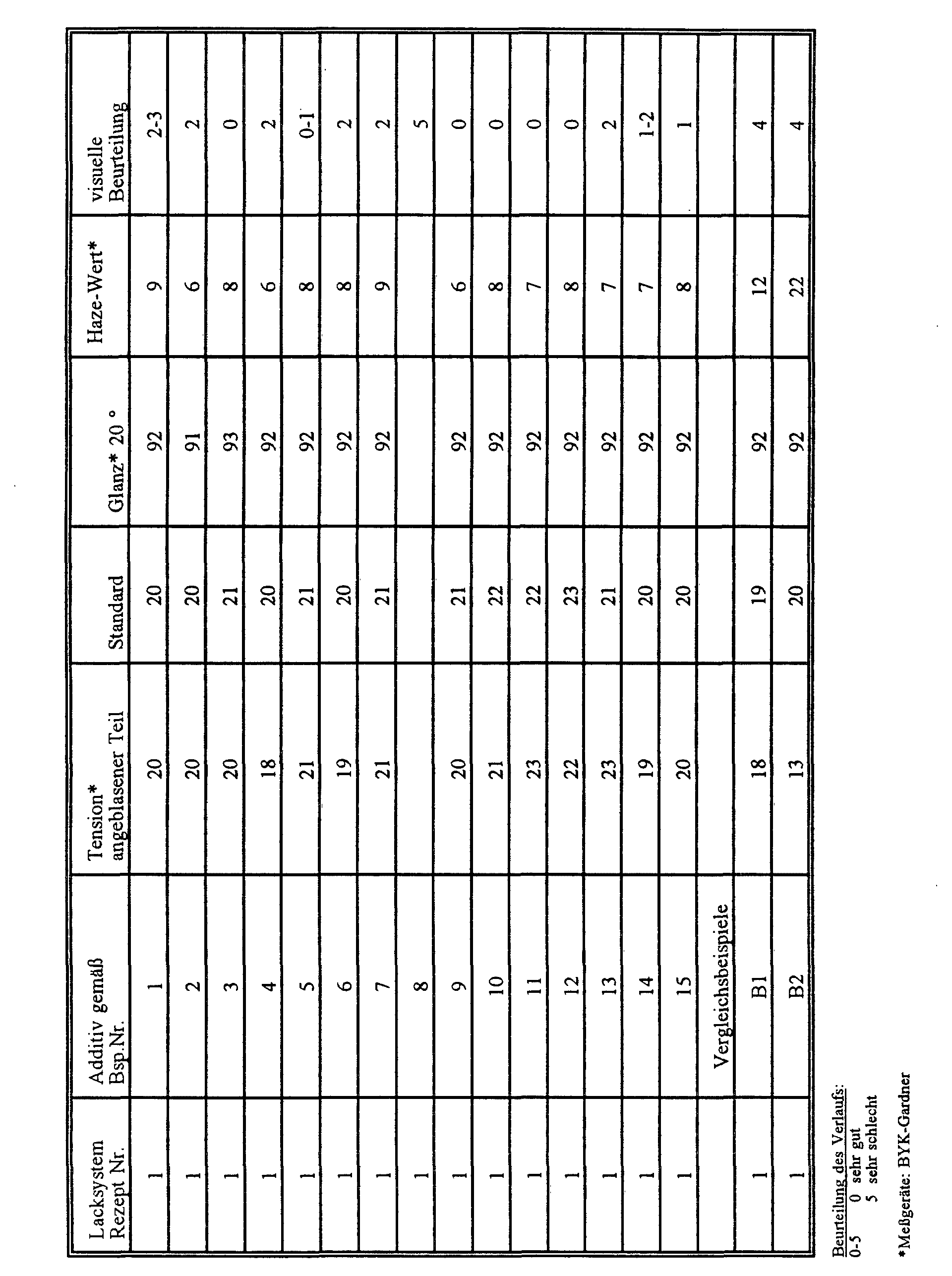

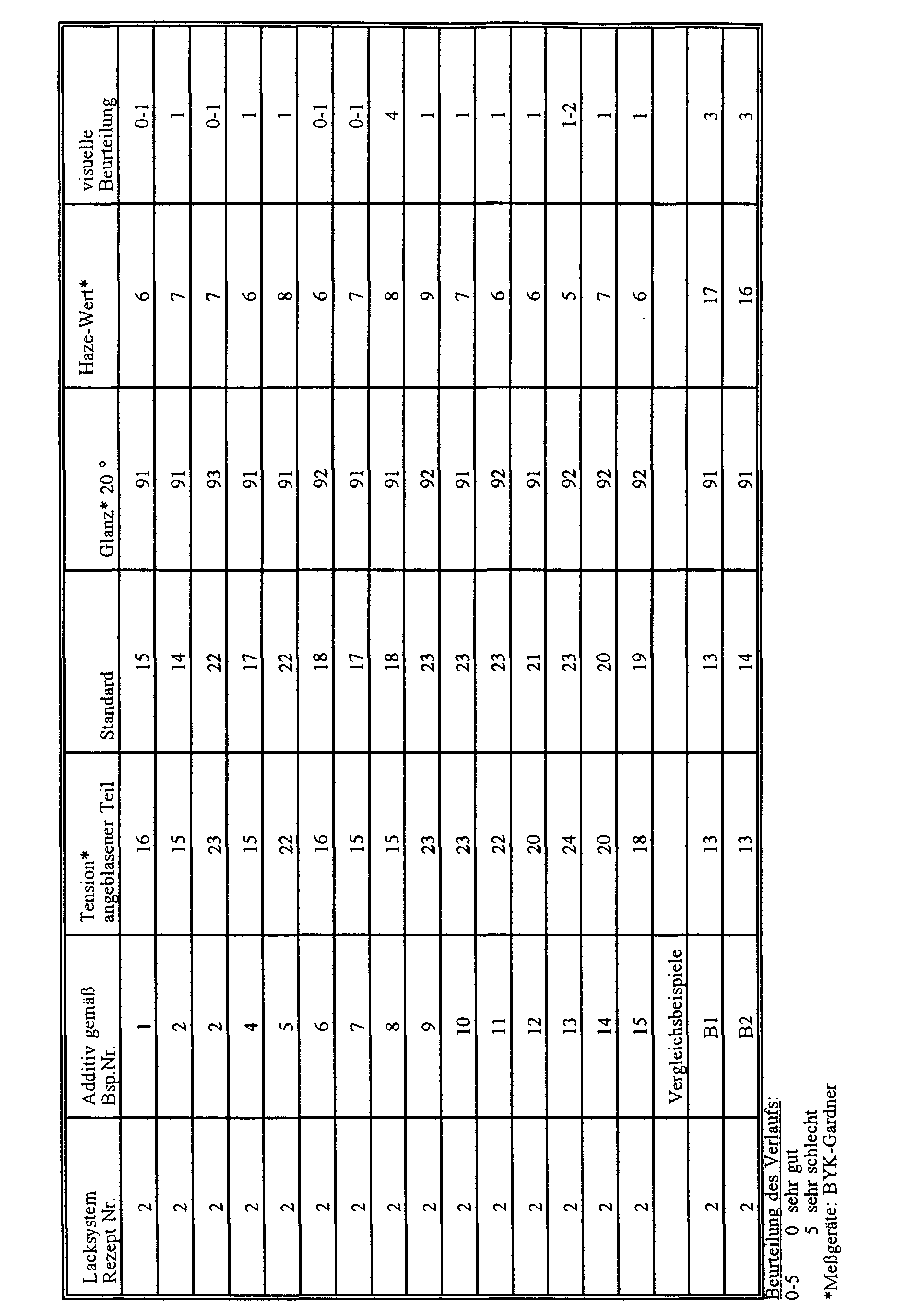

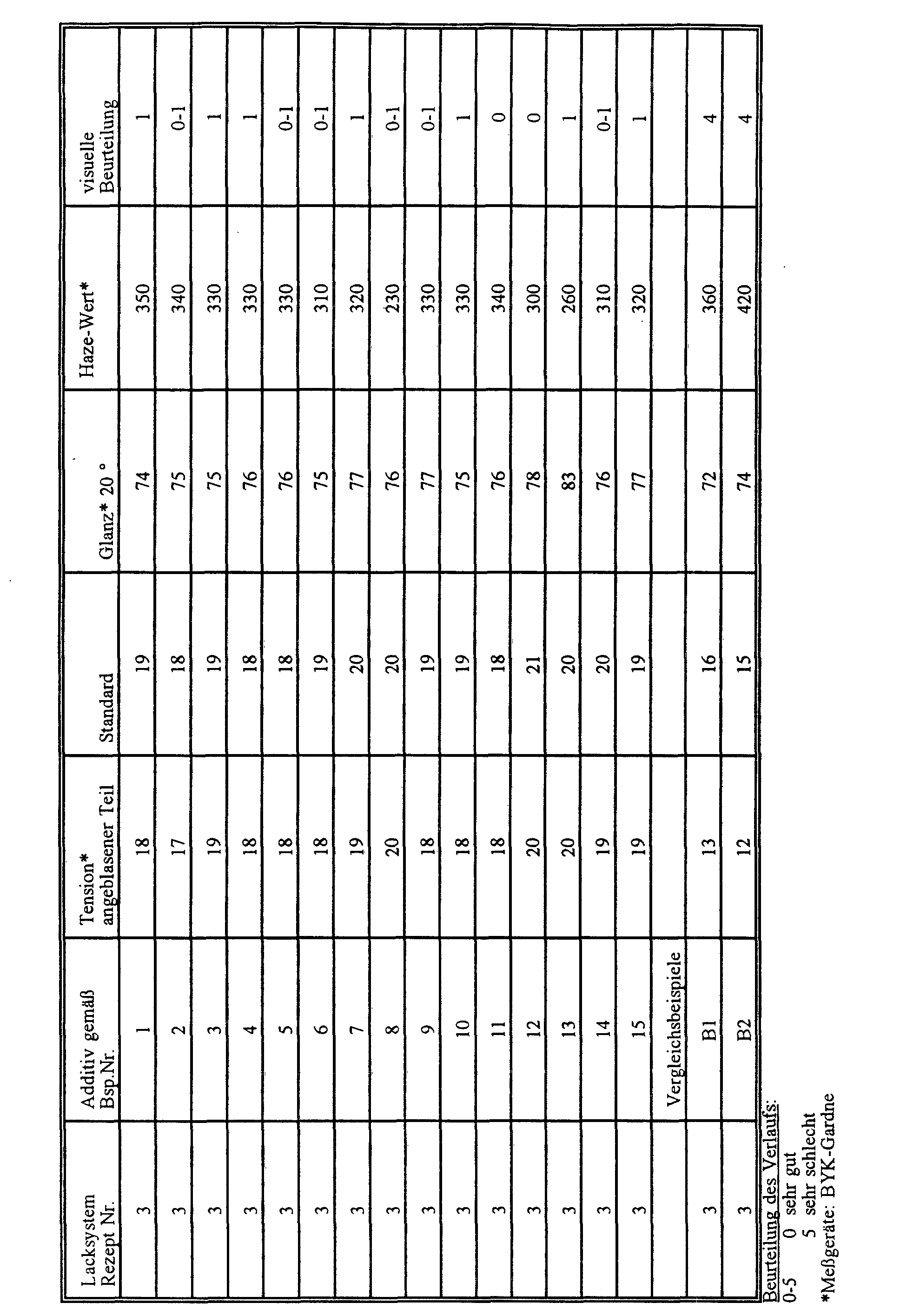

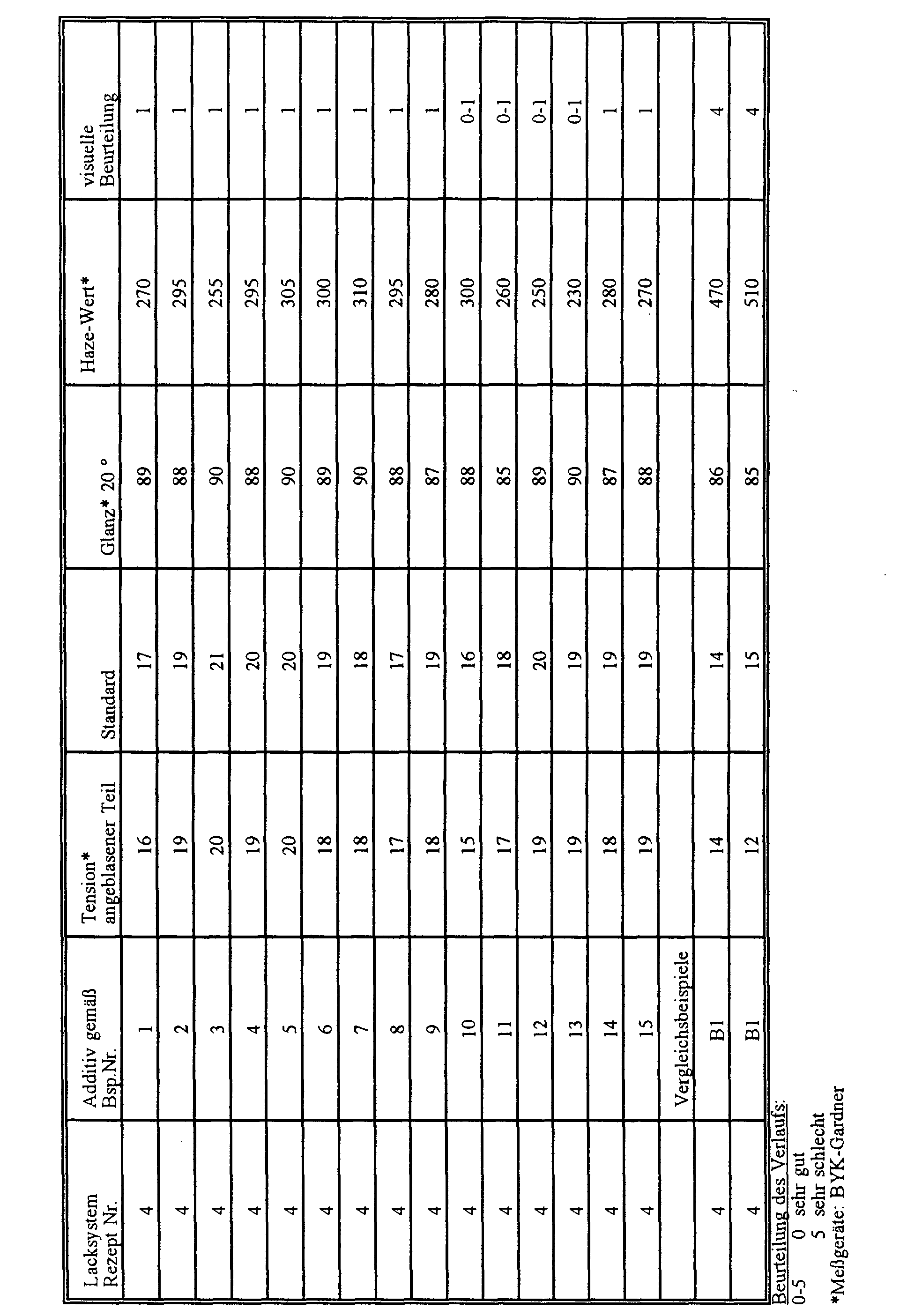

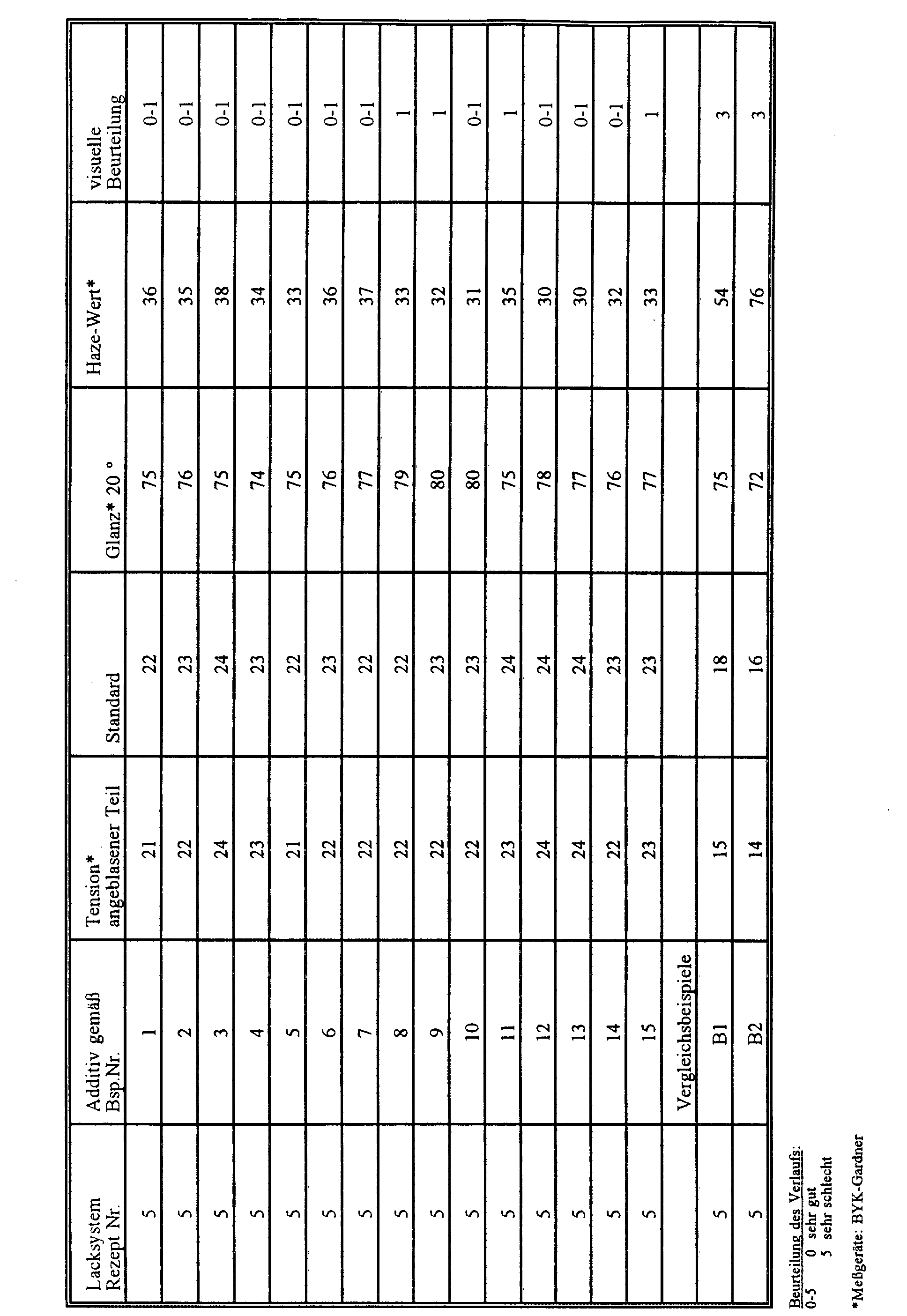

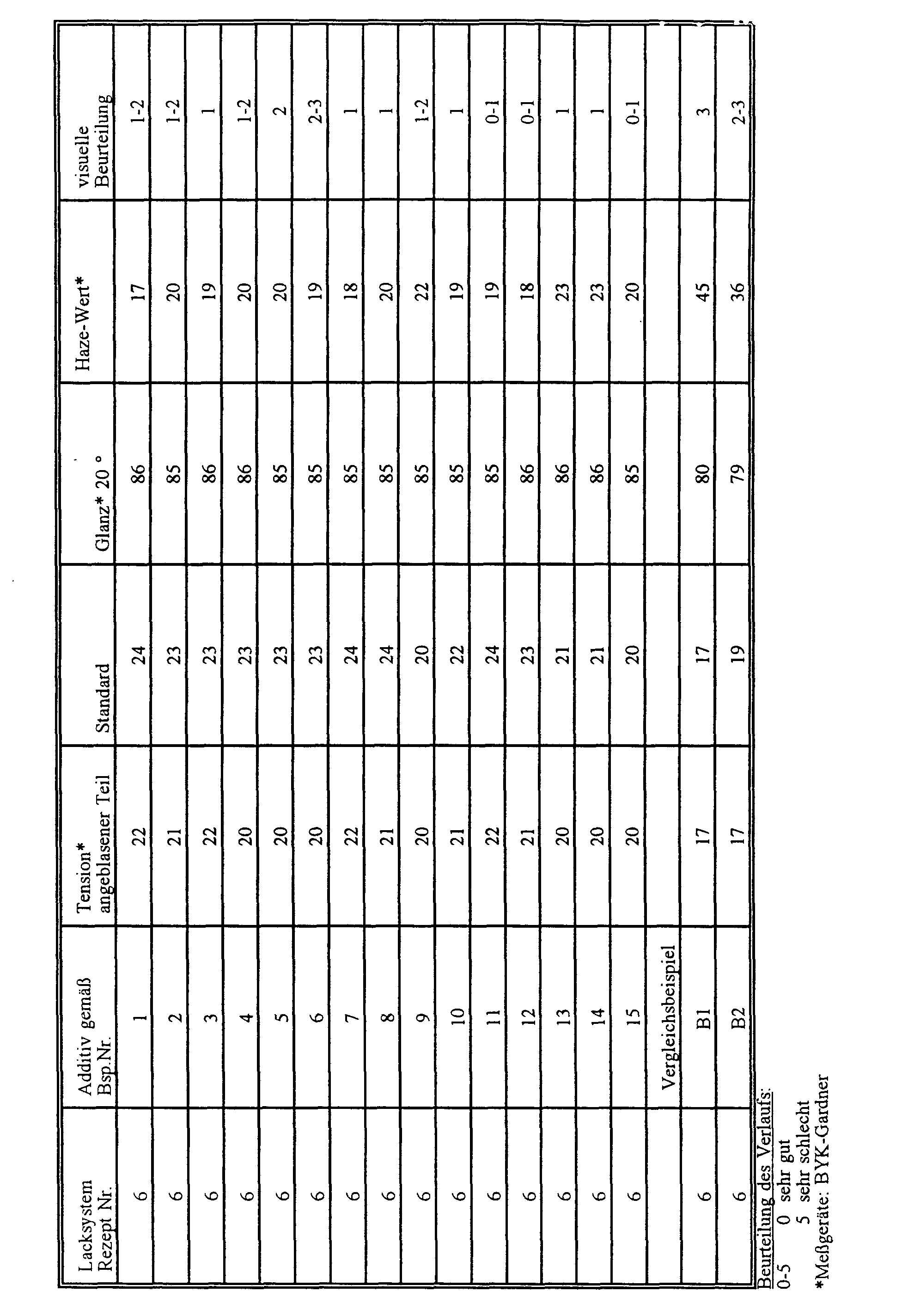

## Patentansprüche

1. Copolymere auf Polysiloxan-Polyether-Basis, die T-Einheiten enthalten und aus statistisch verknüpften Organo-Polysiloxaneinheiten und linearen Polyethereinheiten bestehen, in denen
die Organo-Polysiloxan- und Polyethereinheiten über Si-O-C- und Si-C-Bindungen und
die Organo-Polysiloxanketten über Polyethereinheiten miteinander verknüpft sind, **dadurch gekennzeichnet, daß**
- die Organo-Polysiloxaneinheiten untereinander unter Ausbildung mindestens einer T-Einheit verknüpft sind, wobei das Verhältnis der T-Einheiten zu den Gesamtsiloxyeinheiten 0,02 bis 0,25 beträgt und
- das Verhältnis der Anzahl der Polyethereinheiten zu Organo-Polysiloxaneinheiten 0,07 bis 0,33 und
- die Zahl der Siloxaneinheiten je Gesamtmolekül maximal 50 beträgt.

2. Copolymere auf Polysiloxan-Polyether-Basis nach Anspruch 1, **dadurch gekennzeichnet, daß** das Copolymere auf Polysiloxan-Polyether-Basis ein Copolymer der Formel (I) 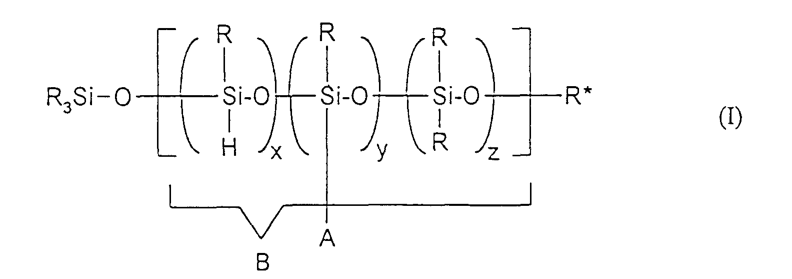
mit R = Alkylresten mit 1 bis 18 Kohlenstoffatomen, gesättigten oder ungesättigten C₅-C₆-Ringsystemen, Aromaten, wobei R innerhalb der Siloxankette [B] gegebenenfalls nicht einheitlich ist,
mit R* = SiR₃, -(CH₂)ₙ[O(CH₂)ₙ]ₘ-O(CH₂)ₙ-R₁ und/oder 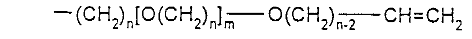 für x = 0
R¹ = -H, -OH, 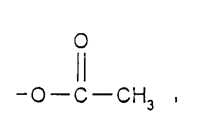
mit A= (CH₂)ₙ[O(CH₂)ₙ]ₘO(CH₂)ₙ-R¹
und/oder = -O(CH₂)ₙ[O(CH₂)ₙ]ₘ-OR²
mit R² = -(CH₂)ₙ-R¹
und/oder = R² = -(CH₂)ₙ₋₂ CH=CH₂
bei x = 0
und/oder = 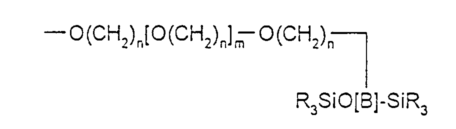
und/oder = 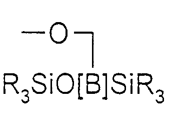
mit n = 2, 3 und/oder 4
mit x = 0 bis 9
y = 0 bis 17
z = 0 bis 50 mit x+y+z ≠ 0
und m = 4 - 200,
wobei die Indizes für [B], 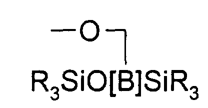 und 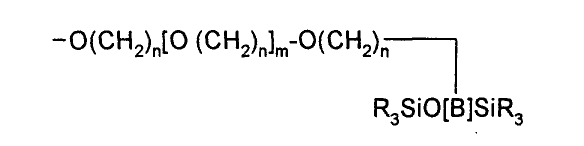 innerhalb einer Kette gleich oder ungleich sein können.

3. Copolymere nach einem der Ansprüche 1 und 2, **dadurch gekennzeichnet, daß** die Organo-Polysiloxaneinheiten gegebenenfalls freie SiH-Gruppen aufweisen.

4. Copolymere nach einem der Ansprüche 1 bis 3, **dadurch gekennzeichnet, daß** die linearen Polyethereinheiten entweder OH- und allyl- bzw. alkenylendgestoppt und/oder beidseitig OH-endgestoppt sind.

5. Copolymere nach einem der Ansprüche 1 bis 4, **dadurch gekennzeichnet, daß** die linearen Polyethereinheiten bevorzugt Mischpolyether aus Ethylenoxid und Propylenoxid sind.

6. Verfahren zur Herstellung der Copolymere nach einem der Ansprüche 1 bis 5, **dadurch gekennzeichnet, daß** SiH-funktionelle Organo-Polysiloxane mit linearen OH-endgestoppten alkenylhaltigen Polyethern in Gegenwart starker Basen umgesetzt werden und die Reaktion gegebenenfalls durch Neutralisation abgebrochen wird.

7. Verfahren nach Anspruch 6, **dadurch gekennzeichnet, daß** vorzugsweise Basen eingesetzt werden, die einen pK_{b}-Wert < 0 und eine Löslichkeit in der Reaktionsmischung von mindestens 1000 ppm aufweisen.

8. Verfahren nach einem der Ansprüche 6 bis 7, **dadurch gekennzeichnet, daß** die Reaktion bis zur vollständigen Entfernung aller SiH-Gruppen durchgeführt wird.

9. Verfahren nach einem der Ansprüche 6 bis 7, **dadurch gekennzeichnet, daß** die Reaktion nach Erreichen der gewünschten Viskosität durch Neutralisation gestoppt wird.

10. Verwendung der Copolymere nach einem der Ansprüche 1 bis 5,
- als Additive für lösemittelhaltige, lösemittelarme und auch wäßrige Lacke, Farben, Pasten, Mörtel, Beschichtungen und andere Zubereitungen,
- zur Beschichtung von Textilien in der Textilindustrie,
- als Ausgangsstoffe für Vernetzungsreaktionen, z.B. für Harze, Elastomere,
- als Schaumstabilisator,
- als Entschäumer
- und/oder als Emulsionsstabilisator.

## Claims

1. Polysiloxane-polyether-based copolymers which comprise T units and comprise randomly linked organopolysiloxane units and linear polyether units, in which
the organopolysiloxane units and polyether units are linked to each other via Si-O-C bonds and Si-C bonds and
the organopolysiloxane chains are linked to each other via polyether units, **characterized in that**
- at least one T unit is formed with linkage of the organopolysiloxane units to each other, the ratio of T units to total siloxy units being from 0.02 to 0.25, and
- the ratio of the number of polyether units to organopolysiloxane units is from 0.07 to 0.33, and
- the maximum number of siloxane units per total molecule is 50.

2. Polysiloxane-polyether-based copolymers according to Claim 1, **characterized in that** the Polysiloxane-polyether-based copolymer is a copolymer of the formula (I) 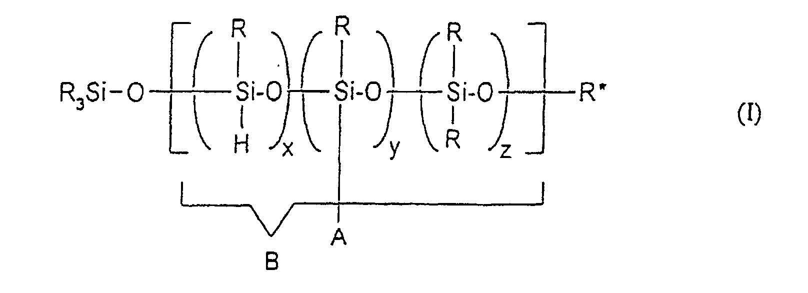
where R = alkyl radicals with 1 to 18 carbon atoms, saturated or unsaturated C₅-C₆ ring systems, aromatics, and within the siloxane chain [B] R may not be uniform,
where R* = SiR₃, -(CH₂)ₙ[O(CH₂)ₙ]ₘ-O(CH₂)ₙ-R¹ and/or -(CH₂)ₙ[O(CH₂)ₙ]ₘ―O(CH₂)ₙ₋₂―CH=CH₂ for x = 0
R¹ = -H, -OH, 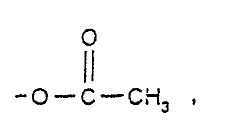
where A = (CH₂)ₙ[O(CH₂)ₙ]ₘO(CH₂)ₙ-R¹
and/or = -O(CH₂)ₙ[O(CH₂)ₙ]ₘ-OR²
where R² = -(CH₂)ₙ-R¹
and/or R² = -(CH₂)ₙ₋₂CH=CH₂
where x = 0
and/or = 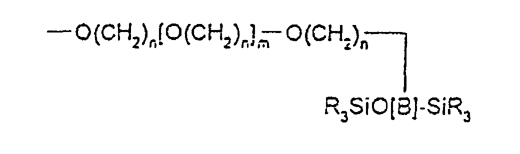
and/or = 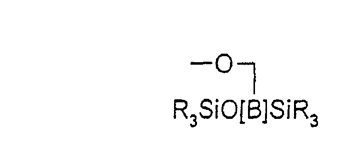 where n = 2, 3 and/or 4 where x = 0 to 9
y = 0 to 17
z = 0 to 15 where x+y+z≠0
and m = 4 - 200,
and the indices for [B], 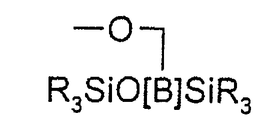 and 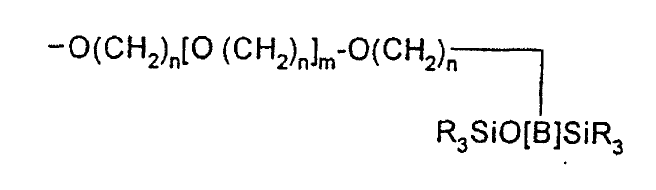 may be identical or nonidentical within a chain.

3. Copolymers according to either of Claims 1 and 2, **characterized in that** the organopolysiloxane units optionally contain free SiH groups.

4. Copolymers according to one of Claims 1 to 3, **characterized in that** the linear polyether units are either OH- and allyl- and/or alkenyl-endblocked and/or bilaterally OH-endblocked.

5. Copolymers according to one of Claims 1 to 4, **characterized in that** the linear polyether units are preferably mixed polyethers of ethylene oxide and propylene oxide.

6. Method of preparing the copolymers according to one of Claims 1 to 5, **characterized in that** SiH-functional organopolysiloxanes are reacted with linear, OH-endblocked, alkenyl-containing polyethers in the presence of strong bases and the reaction is optionally terminated by neutralization.

7. Method according to Claim 6, **characterized in that** bases are preferably used which have a pK_{b} value < 0 and a solubility in the reaction mixture of at least 1 000 ppm.

8. Method according to either of Claims 6 and 7, **characterized in that** the reaction is carried out until all the SiH groups have been completely removed.

9. Method according to either of Claims 6 and 7, **characterized in that** the reaction is terminated by neutralization after the desired viscosity has been reached.

10. Use of the copolymers according to one of Claims 1 to 5
- as additives for solvent-containing, low-solvent and also aqueous varnishes, paints, pastes, mortars, coatings and other preparations,
- for coating textiles in the textile industry,
- as starting materials for crosslinking reactions, e.g. for resins, elastomers,
- as foam stabilizers,
- as defoamers
- and/or as emulsion stabilizers.

## Revendications

1. Copolymères à base de polysiloxane-polyéthers, qui contiennent des motifs T et consistent en motifs d'organo-polysiloxanes et en motifs de polyéthers linéaires reliés en répartition statistique et dans lesquels
les motifs d'organo-polysiloxanes et les motifs de polyéthers sont reliés entre eux par des liaisons Si-O-C et Si-C, et
les chaînes d'organo-polysiloxanes sont reliées entre elles par des motifs de polyéthers, ces copolymères se caractérisant en ce que
- les motifs d'organo-polysiloxanes sont reliés entre eux avec formation d'au moins un motif T, le rapport entre les motifs T et les motifs siloxy totaux allant de 0,02 à 0,25 et
- le rapport entre le nombre des motifs de polyéther et le nombre des motifs d'organo-polysiloxane va 0,07 à 0,33, et
- le nombre des motifs de siloxane par molécule totale est au maximum de 50.

2. Copolymères à base de polysiloxane-polyéthers selon la revendication 1, **caractérisés en ce qu'**ils répondent à la formule (I) 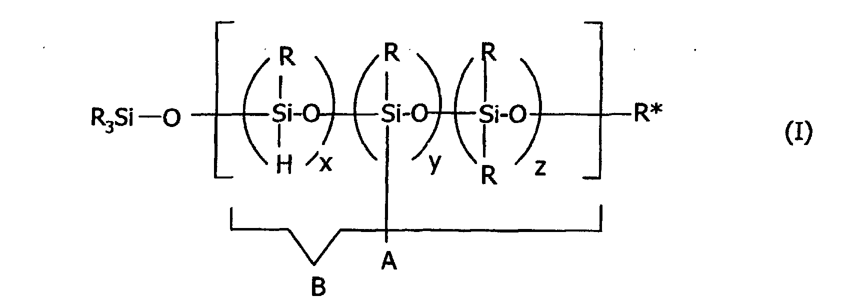 dans laquelle
R= groupes alkyle en C₁-C₁₈, systèmes cycliques saturés ou insaturés en C₅-C₆, radicaux aromatiques, la nature de R pouvant le cas échéant varier à l'intérieur de la chaîne de siloxane [B],
R*= SiR₃, -(CH₂)ₙ[O(CH₂)ₙ]ₘ-O(CH₂)ₙ-R¹ et/ou 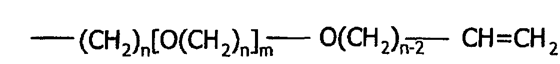 pour x = 0
R¹ = 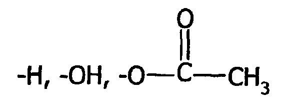
A = (CH₂)ₙ[O(CH₂)ₙ]ₘO(CH₂)ₙ-R¹
et/ou = -O(CH₂)ₙ[O(CH₂)ₙ]ₘ-OR²
avec R² = -(CH₂)ₙ-R¹
et/ou R² = -(CH₂)ₙ₋₂-CH=CH₂
pour x = 0
et/ou 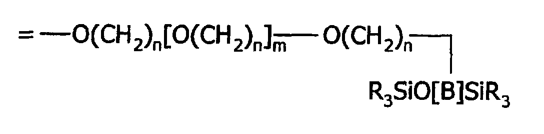 et/ou = 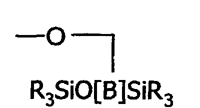
avec n = 2, 3 et/ou 4,
x = 0 à 9
y = 0 à 17
z = 0 à 50, et x+y+z ≠ 0
m = 4 à 200,
les indices pour [B], 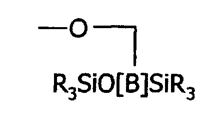 et 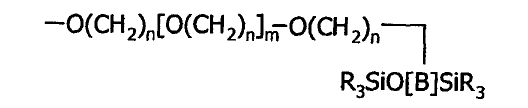 pouvant être identiques ou différents à l'intérieur d'une chaîne.

3. Copolymères selon l'une des revendications 1 et 2, **caractérisés en ce que** les motifs d'organo-polysiloxanes contiennent le cas échéant des groupes SiH libres.

4. Copolymères selon l'une des revendications 1 à 3, **caractérisés en ce que** les motifs de polyéthers linéaires portent des groupes terminaux OH et allyle ou alcénylène et/ou des groupes terminaux OH aux deux extrémités.

5. Copolymères selon l'une des revendications 1 à 4, **caractérisés en ce que** les motifs de polyéthers linéaires consistent de préférence en copolyéthers de l'oxyde d'éthylène et de l'oxyde de propylène.

6. Procédé pour la préparation des copolymères selon l'une des revendications 1 à 5, **caractérisé en ce que** l'on fait réagir des organopolysiloxanes à fonctions SiH avec des polyéthers linéaires contenant des groupes alcényle et à groupes terminaux OH en présence de bases fortes et le cas échéant on interrompt la réaction par une neutralisation.

7. Procédé selon la revendication 6, **caractérisé en ce que** l'on utilise de préférence des bases ayant une valeur de pK_{b} inférieure à 0 et une solubilité d'au moins 1000 ppm dans le mélange de réaction.

8. Procédé selon l'une des revendications 6 à 7, **caractérisé en ce que** l'on poursuit la réaction jusqu'à élimination complète de tous les groupes SiH.

9. Procédé selon l'une des revendications 6 à 7, **caractérisé en ce que** l'on arrête la réaction par neutralisation lorsqu'on a atteint la viscosité voulue.

10. Utilisation des copolymères selon l'une des revendications 1 à 5,
- en tant qu'additifs à des peintures, encres, pâtes, mortiers, produits de revêtement et autres compositions contenant des solvants, à faible teneur en solvant ou même aqueuses,
- pour le revêtement de textiles dans l'industrie textile,
- en tant que composants de départ de réactions de réticulation, par exemple pour des résines, des élastomères,
- en tant que stabilisants des mousses,
- en tant qu'agents antimousse,
- et/ou en tant que stabilisants d'émulsions.
